# EUROPEAN PATENT APPLICATION

(11) **EP 1 492 186 A1**
(43) Date of publication of application: **29.12.2004**
(21) Application number: 03708626.1
(22) Date of filing: 14.03.2003
(51) Int. Cl.: H01M 8/02, H01M 8/10

(54) **CELL UNIT OF SOLID POLYMERIC ELECTROLYTE TYPE FUEL CELL**

(30) Priority: 15.03.2002 JP 2002073226
(71) Applicant: Kabushiki Kaisha Riken, Chiyoda-ku, Tokyo 102-8202 (JP); Nippon Light Metal Company Ltd., Shinagawa-ku, Tokyo 140-8628 (JP)
(72) Inventor: Gao, Yunzhi, Kumagaya-shi, Saitama 360-0031 (JP); Kunimoto, Akira, Kumagaya-shi, Saitama 360-0031 (JP); Shimada, Hideki, Nippon Light Metal Co., Ltd., Ihara-gun, Shizuoka (JP); Ebihara, Ken, Nippon Light Metal Co., Ltd., Ihara-gun, Shizuoka (JP)
(74) Representative: Strehl Schübel-Hopf & Partner
(86) International application number: PCT/JP2003/003091
(87) International publication number: WO 2003/079477

(57) **Abstract**

A polymer electrolyte fuel cell unit comprising (a) a polymer electrolyte membrane 2, (b) a pair of gas-diffusible electrodes 3, 4 respectively attached to both surfaces of the polymer electrolyte membrane 2, (c) a pair of porous, gas-diffusible, conductive graphite collectors 5, 5 in contact with the outside of the electrodes 3, 4, and (d) a pair of metal separators 7, 7 for introducing a fuel gas and an oxygen-containing gas separately into the electrodes 3, 4; a porous, conductive buffer layer 6, 6 having flexibility and gas permeability being provided between the metal separators 7, 7 and the graphite collectors 5, 5; and said metal separator 7, 7 being provided with a conductive, corrosion-resistant coating 9, 9 having a thickness of 0.01 to 10 µm, whose polarization current is 10 µA/cm² or less when measured by an electrochemical polarization evaluation method, at least on a surface in contact with said porous, conductive buffer layer 6, 6.

## Description

### FIELD OF THE INVENTION

The present invention relates to a polymer electrolyte fuel cell unit for use in vehicles, particularly to a polymer electrolyte fuel cell unit comprising metal separators free from deterioration in electric generation performance.

### BACKGROUND OF THE INVENTION

Fuel cells are attracting much attention as new-generation generators, and widely developed, because they efficiently convert fuel to energy without discharging toxic substances such as SOx and NOx and greenhouse gases such as CO₂. Among them, a fuel cell called "ion-exchange polymer membrane fuel cell" or "polymer electrolyte fuel cell" operable in a temperature range not higher than 150°C is suitable for small power sources for use at home or in vehicles, because of a high power density. Accordingly, the polymer electrolyte fuel cell has been extensively researched and developed recently with expectation of commercial use.

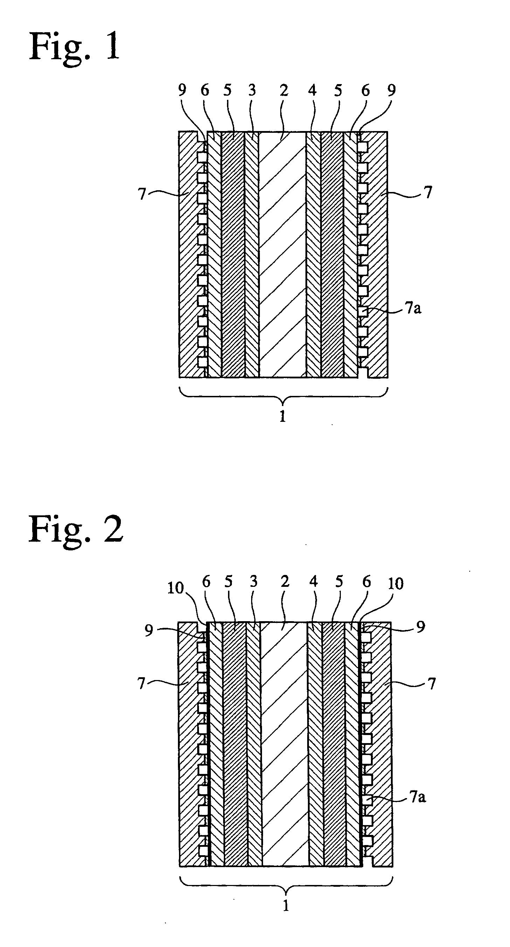

The polymer electrolyte fuel cell usually comprises an ion-exchange fluororesin membrane such as Nafion® having a sulfonic group as a polymer electrolyte membrane. A fuel electrode and an oxygen (air) electrode are attached to the opposing surfaces of the electrolyte membrane to provide a single cell. Each electrode typically comprises carbon black, and water-repellent PTFE particles and precious metal particles as a catalyst dispersed therein. A fuel cell stack is formed by stacking the cells with separator plates having gas-flowing grooves, such that the fuel gas and air are uniformly supplied onto both surfaces of each cell (see Fig. 1).

In the operation of the polymer electrolyte fuel cell with such structure, a hydrogen gas is oxidized to protons, discharging electrons. Protons reach the polymer electrolyte, where they are combined with water molecules to generate H₃O⁺, and move toward the anode. The electrons generated by the oxidization of the hydrogen gas flow into the anode through an external circuit. Oxygen acquires these electrons at the anode to become O²⁻ ions, which are then combined with H₃O⁺ to produce water. This reaction proceeds continuously, allowing electrical energy to be continuously extracted.

Though the theoretical electromotive force of a cell unit is 1.2 V, the polarization of electrodes, a reaction gas crossover, by which a fuel gas penetrates through a polymer electrolyte to an air electrode, and the ohmic resistance of electrodes and collectors cause the voltage to drop, so that the output voltage is practically about 0.6 V to 0.8 V. Therefore, several tens of cells should be stacked in series via separators to provide an output at a practical level.

As is seen from the above principles of electric generation, large amounts of H⁺ ions in the polymer electrolyte membrane turn the polymer electrolyte membrane and the vicinity of the electrodes highly acidic. Oxygen reduced at the anode is combined with H⁺ to produce water, though it may form hydrogen peroxide depending upon the operational state of the cell. Separators exposed to this environment should possess electrochemical stability (corrosion resistance) in addition to conductivity and gas-tightness.

Most conventional separators for fuel cells are made of graphite and manufactured by mechanical working. While graphite has low electric resistance and high corrosion resistance, it has low mechanical strength and is costly to work. Particularly when fuel cells are used for vehicles, materials constituting the fuel cells should have high mechanical strength. In this respect, graphite separators are difficult to use.

Recently, a method has been proposed to produce a graphite separator by forming a homogeneous mixture of graphite powder and a resin into a separator shape and then baking it at high temperatures. In some cases, a mixture of graphite powder and a resin is molded and used as a separator without being baked. In any case, the resulting graphite separator is disadvantageous in electric resistance, gas-tightness, mechanical strength, and thermal conductivity.

Other than carbon separators, metal separators are investigated. Metals are extremely advantageous over carbon materials in electric resistance, gas-tightness, and mechanical strength. It is easy to provide light metal separators because they can be made thinner. However, metals are more vulnerable to corrosion than carbon materials. In addition, metal ions produced by corrosion may migrate into the polymer electrolyte membrane, lowering its ion conductivity and thus affecting the electric generation performance of the fuel cell.

To solve this problem, JP 11-162478 A, for example, proposes a method of improving the corrosion resistance of such a metal separator by plating the entire surface of the separator with a noble metal. Though this method is effective in performance, the separator suffers from high production cost by this corrosion-resistant coating, unsuitable for practical use.

To reduce the cost, separators of corrosion-resistant metals such as stainless steel and nickel alloys have been considered. These metals have very thin oxide films on their surfaces, turning them into a passive state and thus preventing corrosion. However, the oxide film on the surface increases contact resistance, lowering the electric generation of the fuel cell.

To solve this problem, JP 10-308226 A proposes a method of lowering contact resistance by forming a noble metal coating or a metal or resin coating containing carbon particles on a surface of a separator made of a corrosion-resistant material in contact with the electrode. To reduce the weight of the fuel cell, an aluminum separator has also been investigated (see, for example, JP 10-255823 A).

Because of poor corrosion resistance, however, an aluminum separator should be coated with a corrosion-resistant metal. Metals for the corrosion-resistant coating are usually noble metals such as Au (gold). However, noble metals such as Au are expensive, inevitably making aluminum separators coated with noble metals very expensive. To reduce the cost, the noble metal coating should be as thin as possible, though thinner noble metal coatings have lower corrosion resistance, failing to have sufficient durability.

Even if a metal coating with enough corrosion resistance is formed on a metal separator, the coating may be damaged when assembling a fuel cell, resulting in corroding a metal separator substrate and increasing its contact resistance.

As described above, fuel cell units having metal separators, particularly separators of aluminum or its alloy have reduced electric generation performance because of poor corrosion resistance of the separators. Therefore, metal separators have failed to provide practically satisfactory fuel cells at low cost.

### OBJECT OF THE INVENTION

Accordingly, an object of the present invention is to provide a low-cost polymer electrolyte fuel cell unit comprising a metal separator having a structure capable of providing high corrosion resistance and durability.

### DISCLOSURE OF THE INVENTION

As a result of intense research in view of the above object, the inventors have paid attention to the fact that the conductive, corrosion-resistant coating on the metal separator is damaged when a graphite collector is pressed thereto, deteriorating the performance of a fuel cell by corrosion in the coating, and thus found that (1) a conductive, corrosion-resistant coating on the metal separator can be protected by providing a buffer layer in the form of fibers or a foamed sheet having corrosion resistance, flexibility, conductivity, and gas permeability between the collector and the metal separator, or by forming a corrosion-resistant, conductive buffer coating on the collector, instead of placing the collector for the gas diffusion electrode in direct contact with the metal separator; that (2) the conductive, corrosion-resistant coating as thin as 0.01 to 10 µm, which covers at least a surface of the metal separator in contact with the buffer layer, has excellent corrosion resistance, in a case where it has a polarization current of 10 µA/cm² or less when measured by an electrochemical polarization evaluation method; and that a combination of (1) and (2) provides a fuel cell with drastically improved durability at a low cost. The present invention has been completed based on these findings.

Thus, the polymer electrolyte fuel cell unit of the present invention comprises (a) a polymer electrolyte membrane, (b) a pair of gas-diffusible electrodes attached to both surfaces of the polymer electrolyte membrane, (c) a pair of porous, gas-diffusible, conductive graphite collectors in contact with the outside of the electrodes, and (d) a pair of metal separators for introducing a fuel gas and an oxygen-containing gas separately into the electrodes; the fuel cell unit further comprising a porous, conductive buffer layer having flexibility and gas permeability between the metal separator and the graphite collector; and the metal separator being provided with a conductive, corrosion-resistant coating having a thickness of 0.01 to 10 µm, whose polarization current is 10 µA/cm² or less when measured by an electrochemical polarization evaluation method, at least on a surface in contact with the porous, conductive buffer layer.

Because the conductive, corrosion-resistant coating may be formed at least on the surface of the metal separator in contact with the porous, conductive buffer layer, the entire surface of the metal separator or part of its surface in contact with the porous, conductive buffer layer may be provided with the conductive, corrosion-resistant coating.

The buffer layer is preferably a woven or non-woven fabric of conductive fibers made of a metal, carbon or a conductive resin, or a foamed sheet with penetrating pores having gas permeability. The porosity of the buffer layer is preferably 20 to 90%. The buffer layer may be disposed between the collector and the metal separator, or a buffer coating may be formed on a surface of the collector in contact with the metal separator. The thickness of the buffer layer, if any, is preferably 0.05 to 1.0 mm, more preferably 0.1 to 0.2 mm. The thickness of the buffer coating, if any, is preferably 5 to 50 µm, more preferably 10 to 20 µm.

At least a surface of the buffer layer in contact with the metal separator is preferably coated with a metal, a conductive resin or a conductive ceramic to such an extent that it does not deprive the buffer layer of porosity. The conductive fibers forming the buffer layer are preferably coated with a metal or a conductive resin.

The conductive coating of the buffer layer preferably has a thickness of 0.01 to 10 µm, which is preferably at least one selected from the group consisting of Au, Pt, Pd, Ru, Rh, Ir, Ag, Ti, Cu, Pb, Ni, Cr, Co, Fe and alloys thereof. The conductive coating may be formed at least on a surface of the buffer layer in contact with the metal separator, and may be formed on the entire surface of the buffer layer as long as the porosity of the buffer layer is kept. When the entire surface of the buffer layer is coated with the conductive coating, the method of forming the conductive coating is not particularly limited but may be sputtering, vacuum deposition, electroplating, or electroless plating. When only a surface of the buffer layer in contact with the metal separator is coated with the conductive coating, the method of forming the conductive coating is preferably sputtering.

To prevent moisture in a fuel gas or an oxidizing gas from clogging the buffer layer to decrease its gas permeability, a water-repellent coating may be formed on the buffer layer. Teflon® is usually used as a water-repellent coating. The water-repellent coating may be directly formed on the buffer layer or on the above-mentioned conductive coating on the buffer layer.

The conductive, corrosion-resistant coating formed at least on a surface of the metal separator in contact with the buffer layer preferably has a thickness of 0.01 to 10 µm and a polarization current of 10 µA/cm² or less measured by an electrochemical polarization evaluation method. The thickness of the conductive, corrosion-resistant coating is preferably 0.1 to 3 µm, and the polarization current is preferably 7 µA/cm² or less. Further, the conductive, corrosion-resistant coating is preferably made of metals or alloys, particularly made of at least one selected from the group consisting of Au, Pt, Ag, Pd, Rh, Ru, Ir, Ni, Cr and alloys thereof.

A metal separator substrate is preferably made of aluminum or its alloy, titanium or its alloy, stainless steel, Ni-Fe alloys, etc., more preferably aluminum having purity as high as 99.9% or more.

As long as the above-mentioned conductive, corrosion-resistant coating is obtained, any forming method may be used, though metal plating is particularly preferable. After etching the separator substrate, it is repeatedly subjected to a zincate conversion treatment four times or more, which comprises washing with an acid and immersion in a zincate bath, and then to metal plating, to obtain a thin, conductive, corrosion-resistant coating having excellent corrosion resistance. The metal separator substrate before etching preferably has a surface roughness of 0.02 to 0.3 µm at least on a surface, on which the conductive, corrosion-resistant coating is formed.

In one preferable embodiment of the present invention, a graphite collector also serves as a buffer layer. When a pair of porous, gas-diffusible, conductive graphite collectors attached to the outside of the electrodes have flexibility and gas permeability, functioning as porous, conductive buffer layers, no buffer layer need be disposed separately. In this case, too, the conductive, corrosion-resistant coating is formed at least on a surface of the metal separator in contact with the porous, conductive graphite collector, as in the case of having the porous, conductive buffer layer. The same layer as the conductive coating covering the buffer layer is preferably formed at least on a surface of the porous, conductive graphite collector in contact with the metal separator.

### BRIEF DESCRIPTION OF THE DRAWINGS

Fig. 1 is a schematic cross-sectional view showing the layer structure of a fuel cell unit according to one embodiment of the present invention;
Fig. 2 is a schematic cross-sectional view showing the layer structure of a fuel cell unit according to another embodiment of the present invention;
Fig. 3 is a schematic cross-sectional view showing the layer structure of a fuel cell unit according to a further embodiment of the present invention;
Fig. 4 is a schematic cross-sectional view showing an example of the layer structure of a conventional fuel cell unit;
Fig. 5 is a graph showing the electric generation performance before electric generation and after 100 hours of electric generation in Example 1 and Comparative Examples 1 to 3;
Fig. 6 is a graph showing the electric generation performance before electric generation and after 100 hours of electric generation in Examples 1 to 3;
Fig. 7 is a graph showing the electric generation performance before electric generation and after 100 hours of electric generation in Examples 1 and 4;
Fig. 8 is a graph showing the electric generation performance before electric generation and after 100 hours of electric generation in Examples 1, 5 and 6; and
Fig. 9 is a graph showing the electric generation performance before electric generation and after 100 hours of electric generation in Examples 1, 7 and 8.

### THE BEST MODE FOR CARRYING OUT THE INVENTION

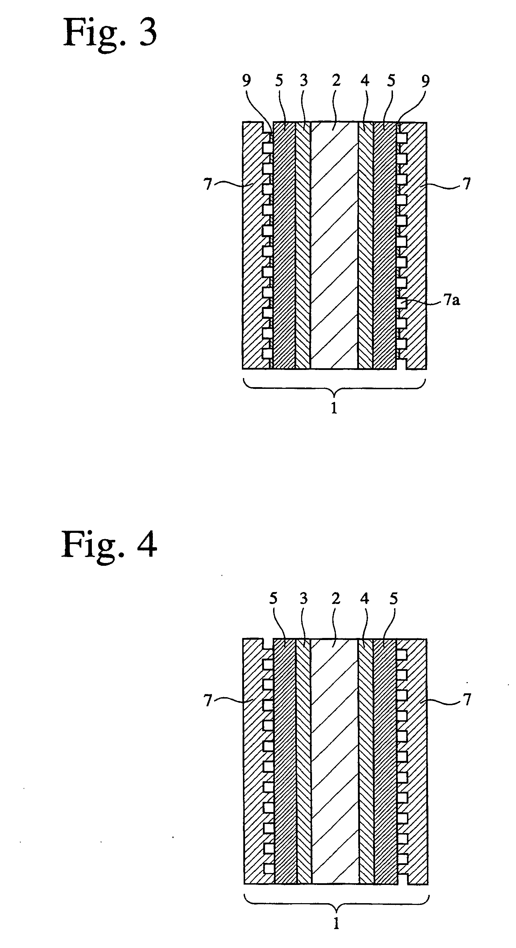

The conventional polymer electrolyte fuel cell unit 1 shown in Fig. 4 comprises a polymer electrolyte membrane 2, a cathode 3 and an anode 4 formed on both sides of the electrolyte membrane 2, collectors 5, 5 disposed on both electrodes 3, 4, and metal separators 7, 7 each in contact with the collector 5, 5.

On the other hand, the polymer electrolyte fuel cell unit 1 of the present invention shown in Fig. 1 comprises a polymer electrolyte membrane 2, a cathode 3 and an anode 4 formed on both sides of the electrolyte membrane 2, collectors 5, 5 disposed on both electrodes 3, 4, buffer layers 6, 6 disposed outside the collectors 5, 5, and metal separators 7, 7 each in contact with the buffer layer 6, 6, conductive, corrosion-resistant coatings 9, 9 being formed on surfaces of the metal separators 7, 7 in contact with the buffer layers 6, 6. Each buffer layer 6, 6 disposed between each collector 5, 5 and each metal separator 7, 7 is constituted by fibers or a foamed sheet having excellent flexibility, electric conductivity and gas permeability. Each conductive, corrosion-resistant coating 9, 9 formed on a surface of each metal separator 7, 7 in contact with each buffer layer 6, 6 has a thickness of 0.01 to 10 µm, and its polarization current is 10 µA/cm² or less when measured by an electrochemical polarization evaluation method. With such structure, even if the conductive, corrosion-resistant coating formed on the metal separator is a thin film, it is not damaged by contact with the collector 5, exhibiting extremely high corrosion resistance.

The polymer electrolyte fuel cell unit 1 according to another preferred embodiment of the present invention shown in Fig. 2 comprises a polymer electrolyte membrane 2, a cathode 3 and an anode 4 formed on both sides of the electrolyte membrane 2, collectors 5, 5 disposed on both electrodes 3, 4, buffer layers 6, 6 disposed outside the collectors 5, 5, each of which has a conductive coating 10, 10 formed on a surface in contact with the separator, and metal separators 7, 7 having conductive, corrosion-resistant coatings 9, 9 formed on surfaces in contact with the buffer layers 6, 6. The formation of a conductive coating 10 on a surface of the buffer layer 6 in contact with the metal separator 7 reduces their contact resistance and improves the resistance of the metal separator 7 to corrosion due to the damage of the conductive, corrosion-resistant coating 9, thereby extremely improving the electric generation characteristics and durability of the cell unit.

The polymer electrolyte fuel cell unit 1 according to a further embodiment of the present invention shown in Fig. 3 comprises a polymer electrolyte membrane 2, a cathode 3 and an anode 4 formed on both sides of the electrolyte membrane 2, collectors 5, 5 disposed on both electrodes 3, 4, and metal separators 7, 7 having conductive, corrosion-resistant coatings 9, 9 formed on surfaces in contact with the collectors 5, 5. In this embodiment, because each collector 5, 5 disposed outside each electrode 3, 4 has flexibility and gas permeability, functioning as a porous, conductive buffer layer, it is not necessary to provide a buffer layer 6 separately.

When the collectors 5, 5 act as buffer layers, the entire collectors 5, 5 need not have porosity, flexibility, etc., which are required for the buffer layers, but a layer of each collector 5, 5 as deep as several tens of micrometers from a surface in contact with the separator 7 need only meet conditions as the buffer layer. For instance, a collector integrally comprising a hard porous layer with small porosity (on the side in contact with the electrode), and a porous layer with large porosity and flexibility (on the side in contact with the metal separator), or a collector having continuously increasing porosity and flexibility from a surface in contact with the electrode to a surface in contact with the metal separator may be used. Such structure makes it unnecessary to dispose the buffer layer separately, thereby simplifying the structure of the fuel cell unit, and reducing the electric resistance of the collectors 5, 5.

Among the constituents of the polymer electrolyte fuel cell, the polymer electrolyte 2, the cathode 3 and the anode 4 may be the same as those in the conventional cell units, and therefore will not be described in detail. The buffer layer, the conductive coating formed on the buffer layer, the separator, and the conductive, corrosion-resistant coating formed on the separator will be described in detail below.

### [1] Buffer layer

The buffer layer 6 should have high conductivity to electrically connect the metal separator 7 to the graphite collector 5. To alleviate any impact when the graphite collector 5 comes into contact with the metal separator 7, the buffer layer 6 should be highly flexible. In addition, the buffer layer 6 should have high thermal conductivity and corrosion-resistant for use in fuel cells.

The buffer layer 6 having such characteristics is preferably constituted by a woven or non-woven fabric of metal fibers, carbon fibers or conductive resin fibers, a foamed sheet of conductive materials, or a carbon paper. The metal fibers may be fibers of stainless steel, nickel, etc. Carbon fibers are preferably used because they are conductive and resistant to corrosion. Commercially available carbon fibers may be used. The conductive resin fibers may be fibers of polyolefin resins, polyester resins, fluororesins, etc., which contain powder of metal or carbon. These fibers preferably have an average diameter of about 0.5 µm to about 20 µm.

When the conductive coating of metals, conductive resins, etc. is formed on the surface of the resin fibers or the foamed sheet, the resin fibers or the foamed sheet per se may not be conductive. Examples of the non-conductive resins are natural fibers, nylon-based resins, polypropylene resins, or polyester resins, etc. The natural fibers may be made of cellulose etc. The average diameter of the fibers is preferably from about 0.5 µm to about 20 µm.

Carbon paper sheets are preferably produced by a combination of a papermaking process and a graphitizing process, etc. In one example, papers made from cellulose fibers with a pulp wastewater, polyvinyl alcohol, etc. as a binder, or commercially available cellulose filter papers with controlled pore size are baked at a temperature of 1000°C to 1800°C to produce the carbon papers.

As is clear from Fig. 1, because a gas passes through the gas-flowing grooves 7a of each separator 7 to an interface between each electrode 3, 4 and the polymer electrolyte 2 in the fuel cell, the gas should also pass through each buffer layer 6. Accordingly, the buffer layer 6 should have high gas permeability. Because large resistance of the gas passing through the buffer layers 6 affects the current output characteristic of the fuel cell, the buffer layer 6 preferably has low resistance to the passage of a gas. The porosity of the buffer layer 6 is preferably 20% to 90%, more preferably 30% to 80%. When the porosity of the buffer layer 6 is less than 20%, the buffer layer 6 has insufficient gas permeability and insufficient flexibility (shock absorbability) to alleviate impact when the graphite collector 5 and the metal separator 7 come to contact with each other. When the porosity of the buffer layer 6 is more than 90%, the buffer layer 6 does not have sufficient mechanical strength, it is made thinner by a pressing force at the time of stacking the cell units.

Though the buffer layer is disposed between the collector and the metal separator in Fig. 1, the buffer layer may be replaced by the buffer coating formed on a surface of the collector in contact with the metal separator.

The thickness of the buffer layer 6, if any, is preferably 0.05 to 1.0 mm, more preferably 0.1 to 0.2 mm, though it varies depending on the porosity. When the thickness of the buffer layer 6 is less than 0.05 mm, it is difficult to produce and dispose the buffer layer on the collector. When the thickness of the buffer layer 6 is more than 1.0 mm, not only is electric resistance too large between the metal separator 7 and the graphite collector 5, but also the cell unit is too thick, making it difficult to provide a compact fuel cell stack.

In the case of the buffer coating, its thickness is preferably 5 to 50 µm, more preferably 10 to 20 µm. When the thickness of the buffer coating is less than 5 µm, sufficient flexibility (shock absorbability) is not obtained. The buffer coating may be formed by spraying, dipping, plating, etc.

To increase the conductivity of the buffer layer 6, a surface of the buffer layer 6 (at least on the side in contact with the separator 7) or surfaces of the conductive fibers forming the buffer layer 6 are preferably provided with conductive coatings made of corrosion-resistant metals or conductive resins or ceramics. The metal forming the conductive coating is preferably at least one selected from the group consisting of Au, Pt, Pd, Ru, Rh, Ir, Ag, Ti, Cu, Pb, Ni, Cr, Co, Fe and alloys thereof. At least one metal selected from the group consisting of Au, Pt, Ir, Ag, Pb, Co and alloys thereof is particularly preferable in terms of conductivity and corrosion resistance. When the conductive coating is formed by the same metal as in the conductive, corrosion-resistant coating formed at least on a surface of the metal separator 7 (described later) in contact with the buffer layer 6, contact resistance between the conductive coating and the separator 7 is extremely lowered, providing excellent electric generation performance.

Examples of the conductive resins forming the conductive coating include, for instance, polyolefins, polyesters, fluororesins, etc., in which powder of metals or carbon is dispersed. Specific examples of the conductive ceramics include indium tin oxide (ITO), etc.

The conductive coating formed on the buffer layer 6 preferably has a thickness of 0.01 to 10 µm. When the thickness of the conductive coating is less than 0.01 µm, sufficient conductivity is not obtained. When the thickness of the conductive coating is more than 10 µm, the conductivity does not improve proportionately, simply raising the cost. The conductive coating may be formed on the buffer layer 6 by sputtering, physical vapor deposition, plating, etc.

### [2] Separator

Though not particularly restrictive, materials for the metal separator 7 may be aluminum or its alloy, titanium or its alloy, stainless steel, Ni-Fe alloys, etc. The separator made of these materials has excellent mechanical strength, and electric and thermal conductivity. Aluminum or its alloy is particularly preferable because it is light in weight and excellent in workability. Though not particularly restrictive, aluminum or its alloy may be, for instance, aluminum alloys of A1100, A5052, A6063, etc. as well as high-purity aluminum (JIS H4170, 1N99). Aluminum having a purity of 99.9% or more is preferable, because it can be uniformly formed, likely to be free from pinholes in the coating.

Formed at least on a surface of the metal separator 7 in contact with the buffer layer 6 is a conductive, corrosion-resistant coating having a thickness of 0.01 to 10 µm, whose polarization current is 10 µA/cm² or less when measured by an electrochemical polarization evaluation method. Materials for the conductive, corrosion-resistant coating are preferably metals or alloys, particularly at least one selected from the group consisting of Au, Pt, Ag, Pd, Rh, Ru, Ir, Ni, Cr and alloys thereof. Among them, Au, Ag, Pt or their alloys are preferable to form the conductive coating having excellent conductivity and corrosion resistance.

The thickness of the conductive, corrosion-resistant coating is 0.01 to 10 µm. When the thickness of the conductive, corrosion-resistant coating is less than 0.01 µm, sufficient corrosion resistance is not obtained. On the other hand, when the thickness of the conductive, corrosion-resistant coating exceeds 10 µm, the corrosion resistance does not improve proportionately, simply raising the cost.

With the conductive, corrosion-resistant coating having polarization current of 10 µA/cm² or less when measured by an electrochemical polarization evaluation method, sufficient corrosion resistance can be obtained even if it is thin. When the polarization current is higher than 10 µA/cm², the conductive, corrosion-resistant coating has defects such as pinholes on a surface, causing corrosion, which lowers a cell output performance. The polarization current of the conductive, corrosion-resistant coating is more preferably 7 µA/cm² or less. A combination of the buffer layer 6 and the conductive, corrosion-resistant coating drastically improves the corrosion resistance of the metal separator 7, thereby making the fuel cell stack inexpensive and providing it with improved durability.

The polarization current is measured by the electrochemical polarization evaluation method described below. Specifically, a sample is immersed in an electrolytic solution such as an aqueous acetic acid solution, etc. in opposite to a platinum electrode, while a reference electrode of silver /silver chloride is immersed in a saturated potassium chloride solution, such that the sample is connected to the saturated potassium chloride solution by a salt bridge, with a potentiostat connected to the sample, the platinum counter electrode and the silver / silver chloride electrode, to scan the potential of the sample from a spontaneous electrode potential to an oxygen-generating potential relative to the silver / silver chloride electrode on the anode side, thereby measuring a peak current flowing through the sample electrode as a polarization current.

The method of forming the conductive, corrosion-resistant coating is not restrictive, as long as it can provide the above-described film characteristics (thickness and polarization current). Though it may be sputtering, physical vapor deposition, plating, etc., a plating method is particularly preferable. To obtain the conductive, corrosion-resistant coating having the above-described structure, it is important that the coating has as small surface defects such as pinholes, etc. as possible. Surface defects such as pinholes, etc. can be suppressed by a method of repeating the on/off of current supply in plating pluralities of times, or a known pinhole-sealing method.

A particularly effective method for forming the conductive, corrosion-resistant coating is a method of etching a metal separator substrate, repeating a zincate conversion treatment comprising washing with acid and immersion in a zincate bath 4 times or more, and plating a metal on the substrate. This method can provide a conductive, corrosion-resistant coating substantially free from surface defects such as pinholes, etc., thereby having extremely excellent corrosion resistance even if it is thin. This method of forming the conductive, corrosion-resistant coating will be described below in detail.

Before an etching treatment, at least a surface of the metal separator substrate, on which the conductive, corrosion-resistant coating is formed, is subjected to a polishing treatment, such that it has a surface roughness of preferably 0.02 to 0.3 µm, more preferably 0.03 to 0.2 µm according to JIS B 0601(2001). When the surface roughness of the metal separator substrate before the etching treatment is more than 0.3 µm, surface defects such as pinholes, etc. are generated on the conductive coating due to recesses on the separator substrate surface, so that the metal separator 7 has a low corrosion resistance. On the other hand, when the surface roughness of the separator substrate is less than 0.02 µm, the resultant conductive coating undesirably has low adhesion to the separator surface, so that the conductive coating is likely to peel from the separator by contact with the electrode during using the fuel cell.

Methods for adjusting the surface roughness of the metal separator substrate are not particularly restrictive, but may be properly selected depending on the materials. The surface-polishing treatment may be, for instance, an electrolytic polishing treatment, a mechanical polishing treatment, a buffing treatment, a blast-polishing treatment, a barrel-polishing treatment and combinations thereof, etc., the electrolytic polishing treatment, the mechanical polishing treatment, the buffing treatment, the blast polishing treatment and these combinations being preferable, and the electrolytic polishing treatment being more preferable.

The ground separator substrate is degreased and then etched under the following conditions. The etching treatment comprises the immersion of the separator substrate in an etching liquid. The etching liquid may be an aqueous alkaline solution of sodium hydroxide, potassium hydroxide, sodium carbonate, etc., or an aqueous acid solution such as an aqueous solution of sulfuric acid and phosphoric acid, etc.

When the aqueous alkaline solution is used, its concentration is preferably 20 to 200 g/L, more preferably 50 to 150 g/L. The immersion temperature is preferably 30 to 70°C, more preferably 40 to 60°C. The immersion time is preferably 0.5 to 5 minutes, more preferably 1 to 3 minutes.

On the other hand, when the aqueous sulfuric acid-phosphoric acid solution is used as the aqueous acid solution, the concentration of sulfuric acid is preferably 10 to 500 g/L, more preferably 30 to 300 g/L. The concentration of phosphoric acid is preferably 10 to 1200 g/L, more preferably 30 to 500 g/L. The immersion temperature is preferably 30 to 110°C, more preferably 55 to 75°C. The immersion time is preferably 0.5 to 15 minutes, more preferably 1 to 6 minutes.

In the zincate conversion treatment conducted after the etching treatment, the acid-washing step uses an acid-washing bath comprising nitric acid, sulfuric acid, or hydrochloric acid, etc. in a concentration of 5 to 50% by mass. The acid-washing bath is preferably an aqueous nitric acid solution in a concentration of 10 to 40% by mass, more preferably an aqueous nitric acid solution in a concentration of 25 to 30% by mass. The immersion temperature is preferably 15 to 30°C, more preferably 20 to 25°C. The immersion time is preferably 5 to 120 seconds, more preferably 15 to 60 seconds. By acid washing under the above conditions, the zincate conversion layer can be efficiently removed.

In the immersion step in a zincate bath, the zincate bath comprises an aqueous alkaline zinc oxide solution, in which the concentration of zinc oxide is preferably 1.5 to 60 g/L, more preferably 3.5 to 50 g/L, and the concentration of an alkali such as sodium hydroxide, potassium hydroxide, etc. is preferably 40 to 400 g/L, more preferably 80 to 200 g/L. The immersion temperature is preferably 15 to 30°C, more preferably 20 to 25°C. The immersion time is preferably 5 to 120 seconds, more preferably 15 to 50 seconds. When the concentration of zinc oxide in the zincate bath is lower than 1.5 g/L, the resultant zincate conversion layer is non-uniform. On the other hand, when it is higher than 60 g/L, the resultant plating layer is non-uniform. When the alkali concentration is lower than 40 g/L, the zincate conversion layer has low adhesion. On the other hand, when it is higher than 400 g/L, the zinc layer has increased surface roughness.

To form the conductive, corrosion-resistant coating on the metal separator 7, it is preferable to repeat the zincate conversion treatment comprising the above acid washing and then immersion in the zincate at least 4 times. When this zincate conversion treatment is 3 times or less, the plating layer may have pinholes, making it unlikely that the resultant plating surely does not have surface defects.

After conducting the zincate conversion treatment 4 times or more, a plating treatment is carried out to have a thickness of 0.01 to 10 µm. The plating treatment method may be electroless plating, substitution plating, electroplating, or electro-strike plating, etc. The composition of the plating bath may be the same as in conventional ones. The plating conditions may be properly selected from conventional ones depending on the type of a metal to be plated. In the case of plating gold, for instance, it is preferable that the bath temperature is 50 to 75°C, and that the current density is 0.1 to 0.5 A/dm².

Because the metal per se is light in weight and excellent in workability and electric conductivity, having low contact resistance with the collector 5 free from corrosion by contact, the fuel cell stack comprising metal separators 7 each provided with a thin, conductive, corrosion-resistant coating substantially free from defects has an improved electric generation performance and long durability, meeting the demand of reducing weight and cost. Further, the metal separator 7 provided with the conductive, corrosion-resistant coating has excellent mechanical strength, electric conductivity and thermal conduction.

The present invention will be described in more detail with reference to Examples, though it is not limited to these Examples.

### Example 1

A 5-mm-thick aluminum plate was pressed and formed into a separator shape for a fuel cell. The resultant aluminum separator substrate was immersed in a degreasing bath comprising 25 g of sodium hydroxide, 25 g of sodium carbonate, 25 g of sodium phosphate, 1.5 g of a surfactant and about 1 litter of water at 60°C, for 5 minutes to carry out a degreasing treatment. After washed with water, the aluminum separator substrate was immersed in a sodium hydroxide solution (concentration: 50 g/L) at 50°C for 3 minutes, to carry out an etching treatment. The surface roughness of the separator substrate before etching was 0.35 µm.

After the etched aluminum separator substrate was immersed in an aqueous nitric acid solution (concentration: 30% by mass) at 50°C for 90 seconds for acid washing, it was immersed in a zincate bath comprising 100 g of sodium hydroxide, 50 g of zinc oxide, 1 g of ferric chloride and 10 g/L of a Rochelle salt in about 1 litter of water at room temperature for 30 seconds. A zincate conversion treatment comprising washing with acid and immersion in a zincate bath was conducted 4 times in total.

Next, electroplating was conducted in a gold-plating bath comprising 10 g of potassium gold cyanide, 30 g of potassium cyanide, 30 g of potassium carbonate and 30 g of potassium secondary phosphate in about 1 litter of water at 55°C, at a current density of 0.5 A/dm², to form a 0.5-µm-thick, uniform gold plating layer with a polarization current of 6 µA/cm² as a conductive, corrosion-resistant coating on the entire surface of the aluminum separator.

The aluminum separators 7 provided with the conductive, corrosion-resistant coating were assembled with a polymer electrolyte membrane 2, a cathode 3, an anode 4, collectors 5, 5 and buffer layers 6, 6 in the order shown in Fig. 1, and fastened by bolts to form a cell unit. The polymer electrolyte membrane 2 was made of Nafion® as thick as 170 µm, the cathode 3 and the anode 4 were constituted by carbon black carrying a Pt catalyst, each of the collectors 5, 5 was constituted by a 250-µm-thick carbon paper with a porosity of about 50%. Further, a pair of 0.2-mm-thick carbon cloths with a porosity of about 80% were used for the buffer layers 6, 6.

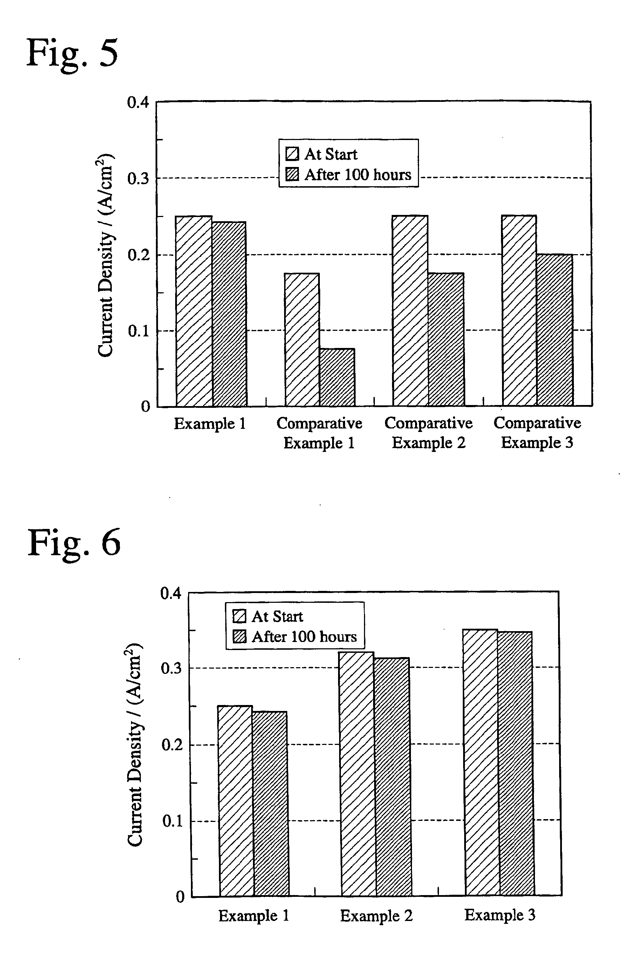

The output current of the fuel cell unit was measured at a temperature of 60°C and at a voltage of 0.65 V. Then, the cell unit was operated to generate electricity for 100 hours and the output current at a voltage of 0.65 V was again measured. The results are shown in Figs. 5 to 9. The results in this Example revealed that the output current did not substantially change after 100 hours of electric generation. Also, the measurement of time (cell unit life), until which the electromotive force of the cell decreased by 10% from the level at the start of electric generation, revealed that the cell unit life was 300 days or more in Example 1, extremely improved than that of the conventional cell unit.

### Comparative Example 1

Using a 5-mm-thick aluminum plate to form separator substrates for a fuel cell, a degreasing treatment, water washing, an etching treatment, a zincate conversion treatment, and an electroplating treatment in a gold-plating bath were conducted in the same manner as in Example 1 except that the zincate conversion treatment comprising washing with acid and a zincate immersion treatment was conducted 3 times. A 0.5-µm-thick gold plating layer with a polarization current of 110 µA/cm² was formed on the entire surface of the aluminum separator.

The resultant aluminum separators were brought into direct contact with the collectors 5, 5 as shown in Fig. 4, assembled with the polymer electrolyte membrane 2, the cathode 3 and the anode 4, and fastened by bolts to form a cell unit. All of the polymer electrolyte membrane 2, the cathode 3, the anode 4 and the collectors 5, 5 were the same as in Example 1.

The output current of the fuel cell unit was measured under the same conditions as in Example 1. The results are shown in Fig. 5. In this Comparative Example, the output current was lower than in Example 1 at the start of electric generation, and it significantly dropped after 100 hours of electric generation. The cell unit life was 20 days, extremely shorter than in Example 1.

### Comparative Example 2

A 5-mm-thick aluminum plate was used to form separator substrates for a fuel cell. After carrying out a degreasing treatment, water washing and an etching treatment in the same manner as in Example 1, a zincate conversion treatment comprising washing with acid and a zincate immersion treatment was conducted 4 times, followed by an electroplating treatment in a gold-plating bath. The resultant gold plating layer was as thick as 0.5 µm and had a polarization current of 6.0 µA/cm² as in Example 1.

The resultant aluminum separators were brought into direct contact with the collectors 5, 5 as shown in Fig. 4, and assembled with the polymer electrolyte membrane 2, the cathode 3 and the anode 4, and fastened by bolts to form a cell unit. All of the polymer electrolyte membrane 2, the cathode 3, the anode 4 and the collectors 5, 5 were the same as in Example 1.

The output current of this fuel cell unit was measured under the same conditions as in Example 1. The results are shown in Fig. 5. In this Comparative Example, the output current significantly dropped after 100 hours of electric generation, though it was substantially the same as in Example 1 at the start of electric generation. The cell unit life in this Comparative Example was 120 days, longer than in Comparative Example 1, but extremely shorter than in Example 1.

### Comparative Example 3

Using a 5-mm-thick aluminum plate to form separator substrates for a fuel cell, a gold plating layer was formed in the same manner as in Comparative Example 1, except that a zincate conversion treatment comprising washing with acid and a zincate immersion treatment was conducted 3 times. The resultant gold plating layer was as thick as 0.5 µm and had a polarization current of 110 µA/cm² as in Comparative Example 1.

The aluminum separators each provided with a gold plating layer were assembled with a polymer electrolyte membrane 2, a cathode 3, an anode 4, collectors 5, 5 and buffer layers 6, 6 in the order shown in Fig. 1, and fastened by bolts to form a cell unit. All of the polymer electrolyte membrane 2, the cathode 3, the anode 4, the collectors 5, 5 and the buffer layers 6, 6 were the same as in Example 1.

The output current of this fuel cell unit was measured under the same conditions as in Example 1. The results are shown in Fig. 5. In this Comparative Example, though the output current at the start of electric generation is substantially the same as that in Example 1, the output current significantly dropped after 100 hours of electric generation. The cell unit life in this Comparative Example was 120 days, longer than in Comparative Example 1, but extremely shorter than in Example 1.

### Example 2

A 5-mm-thick aluminum plate was pressed and formed into separator substrates for a fuel cell. Each aluminum separator substrate was provided with a 0.5-µm-thick Au layer having a polarization current of 6 µA/cm² through the same treatment steps as in Example 1. Each 0.2-mm-thick carbon cloth piece having a porosity of about 80% for the buffer layers 6, 6 was provided with an Ag coating as thick as about 0.1 µm on a surface in contact with the separator. These parts were assembled with a polymer electrolyte membrane 2, a cathode 3, an anode 4 and collectors 5, 5 as shown in Fig. 2, and fastened by bolts to form a cell unit. All of the polymer electrolyte membrane 2, the cathode 3, the anode 4 and the collectors 5, 5 were the same as in Example 1.

The output current of this fuel cell unit was measured under the conditions of a temperature of 60°C and a voltage of 0.65 V. After 100 hours of electric generation, the output current was measured again at a voltage of 0.65 V. The results are shown in Fig. 6. The comparison between this Example and Example 1 revealed that the formation of the conductive coating on a surface of the buffer layer 6, 6 in contact with the separator increased output current at the start of electric generation. This seems to be due to the fact that the formation of the conductive coating decreases contact resistance between the buffer layer 6 and the separator 7. The output current did not substantially change after 100 hours of electric generation. The cell unit in this Example had a cell unit life of 350 days or more, higher than in Example 1.

### Example 3

An Au coating was formed on the surface of the separator for a fuel cell formed by a 5-mm-thick aluminum plate in the same manner as in Example 2. An Au layer having a thickness of about 0.1 µm was formed by a sputtering method on a surface of a 0.2-mm-thick carbon cloth having a porosity of about 80% for the buffer layers 6, 6 in contact with the separator. A fuel cell unit was assembled completely in the same manner as in Example 2 except that the Au layer was formed for the buffer layers 6, 6.

The output current of the fuel cell unit was measured under the same conditions as in Example 2 before and after electric generation. The results are shown in Fig. 6. In this Example, the output current was higher than in Example 2 at the start of electric generation, indicating the effect obtained by using the same metal for the conductive coating covering the buffer layer and the conductive, corrosion-resistant coating covering the separator. The output current did not substantially change after 100 hours of electric generation. The cell unit in this Example had a cell unit life of 360 days or more, higher than in Example 1.

### Example 4

An Au layer was formed on a surface of a separator formed by a 5-mm-thick aluminum plate for a fuel cell in the same manner as in Example 1. A 0.2-mm-thick carbon cloth having a porosity of about 80% for a buffer layer was immersed in a polytetrafluoroethylene (PTFE) solution and treated at a temperature of 280°C to have water repellency. A fuel cell unit was assembled completely in the same manner as in Example 1 except that a PTFE layer was formed for the buffer layer.

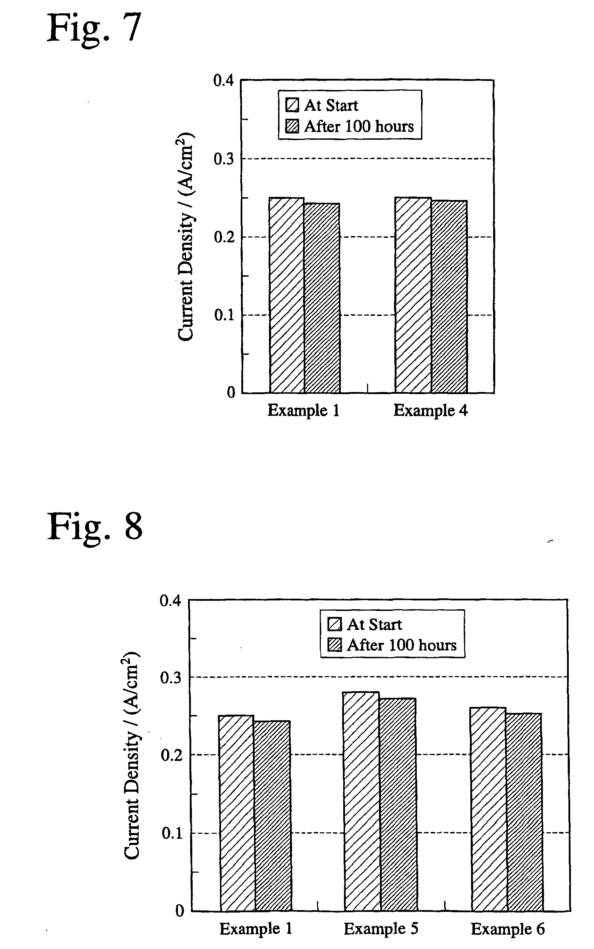

The output current of this fuel cell unit was measured under the conditions of a temperature of 60°C and a voltage of 0.65 V. After 100 hours of electric generation, the output current was measured again at voltage of 0.65 V. The results are shown in Fig. 7. The results in this Example revealed that the output current change before and after 100 hours of electric generation was smaller than in Example 1, indicating that the formation of a water-repellent coating on the buffer layer suppressed the corrosion of the separator. The cell unit in this Example had a cell unit life of 350 days or more, meaning improved durability than in Example 1.

### Example 5

An Au coating was formed on the surface of the separator for a fuel cell made of a 5-mm-thick aluminum plate in the same manner as in Example 1. A 250-µm-thick carbon paper having a porosity of about 50% was used as a collector, and a 10-µm-thick Ag layer was formed by a sputtering method only on a surface of the collector in contact with the separator. The sputtering conditions were as follows:
Atmosphere: Ar at 20 Torr,
Temperature: 60°C,
Sputtering time: 2 hours, and
RF power: 100 W.

The resultant Ag coating had a porosity of 20%. A fuel cell unit was assembled in the same manner as in Example 1, except that the collectors each provided with such a buffer coating were thermally bonded to the electrodes.

The output current of this fuel cell unit was measured under the conditions of a temperature of 60°C and a voltage of 0.65 V. After 100 hours of electric generation, the output current was measured again at voltage of 0.65 V. The results are shown in Fig. 8. In this Example, in which the buffer coating was formed on the collector, current change was extremely small between before and after 100 hours of electric generation as in Example 1 having the buffer layer, indicating that the corrosion of the separator was suppressed. The cell unit in this Example had a cell unit life of 290 days or more, substantially the same as in Example 1.

### Example 6

An Au layer was formed on a surface of a separator for a fuel cell formed by a 5-mm-thick aluminum plate in the same manner as in Example 1. A 250-µm-thick carbon paper having a porosity of about 50% was used as a collector in contact with the electrode, and a slurry comprising carbon black powder, polypropylene and toluene was applied to a surface of the collector in contact with the separator and dried. The resultant buffer coating had a thickness of 15 µm and a porosity of 40%. A fuel cell unit was assembled in the same manner as in Example 1, except that the collector having the buffer coating was thermally bonded to the electrode.

The output current of this fuel cell unit was measured under the conditions of a temperature of 60°C and a voltage of 0.65 V. After 100 hours of electric generation, the output current was measured again at voltage of 0.65 V. The results are shown in Fig. 8. In this Example, in which the buffer coating was formed on the collector, current change was extremely small between before and after 100 hours of electric generation as in Example 1 having the buffer layer, indicating that the corrosion of the separator was suppressed. The cell unit in this Example had a cell unit life of 280 days or more, substantially the same as in Example 1.

### Examples 7 and 8

A conductive, corrosion-resistant coating was formed in the same manner as in Example 1, except that a 5-mm-thick aluminum plate was pressed to the shape of a separator for a fuel cell, and subjected to electrolytic polishing (Example 7) and chemical polishing (Example 8) under the following conditions as a surface-polishing treatment before an etching treatment.

### (1) Electrolytic polishing (Example 7)

The degreased separator substrate was immersed in an electrolytic polishing bath containing 220 ml/L of perchloric acid and 780 ml/L of acetic anhydride. With the separator substrate as an anode and the platinum plate as a cathode, the electrolytic polishing treatment was conducted at a current density of 10 µA/cm² for 5 minutes, washed with water and then dried. The electrolytically ground separator had a surface roughness of 0.08 µm. After forming a conductive, corrosion-resistant Au coating on this separator in the same manner as in Example 1, it had a polarization current of 4 µA/cm² or less.

### (2) Chemical polishing (Example 8)

The separator substrate was immersed in a chemical polishing agent comprising 75% by volume of phosphoric acid, 20% by volume of nitric acid and 5% by volume of water at 90°C for 5 minutes, washed with water and then dried. The chemically ground separator had a surface roughness of 0.08 µm. After forming a conductive, corrosion-resistant Au coating on this separator in the same manner as in Example 1, it had a polarization current of 4 µA/cm² or less.

Each separator provided with the conductive, corrosion-resistant coating was assembled with a polymer electrolyte membrane 2, a cathode 3, an anode 4, collectors 5, 5, and buffer layers 6, 6, and fastened by bolts to form a cell unit.

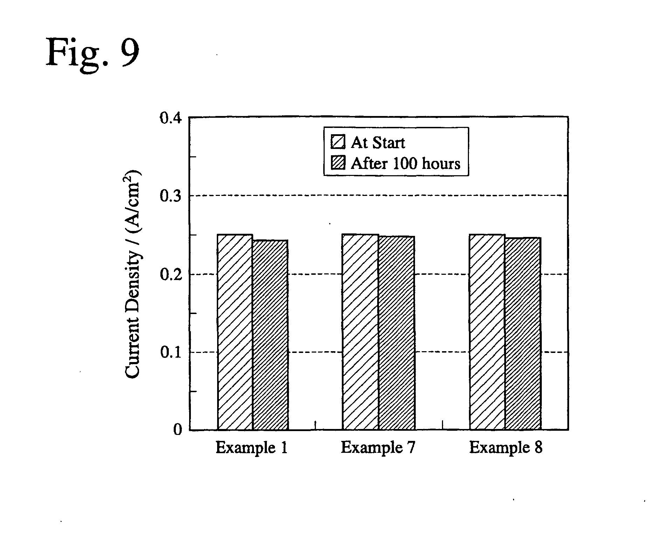

The output current of each cell unit before and after electric generation was measured under the same conditions as in Example 1. The results are shown in Fig. 9. In Examples 7 and 8, the output current at the start of electric generation was substantially the same as in Example 1, but the decrease of the output current after 100 hours of electric generation was smaller than in Example 1. This indicates that the corrosion resistance of the separator is improved by making the surface roughness of the separator substrate smaller to some extent. The cell unit life was 360 days or more in Example 7, and 350 days or more in Example 8, longer than in Example 1.

### APPLICABILITY IN INDUSTRY

As described above, the polymer electrolyte fuel cell unit of the present invention comprising the buffer layer with electric conductivity, gas permeability and flexibility between the metal separator and the collector, and the conductive, corrosion-resistant coating having a thickness of 0.01 to 10 µm, whose polarization current is 10 µA/cm² or less when measured by an electrochemical polarization evaluation method, formed on a surface of the metal separator in contact with the buffer layer, is inexpensive, with drastically improved corrosion resistance in the metal separator, thereby making the fuel cell maintain the performance of generating electricity for a long period of time. In addition, the formation of a conductive coating on a surface of the buffer layer in contact with the separator further reduces their contact resistance, thereby improving the corrosion resistance of the metal separator and thus the performance of the fuel cell of generating electricity.

## Claims

1. A polymer electrolyte fuel cell unit comprising (a) a polymer electrolyte membrane, (b) a pair of gas-diffusible electrodes attached to both surfaces of said polymer electrolyte membrane, (c) a pair of porous, gas-diffusible, conductive graphite collectors in contact with the outside of said electrodes, and (d) a pair of metal separators for introducing a fuel gas and an oxygen-containing gas separately into said electrodes; wherein it further comprises a porous, conductive buffer layer having flexibility and gas permeability between said metal separator and said graphite collector; and wherein said metal separator is provided with a conductive, corrosion-resistant coating having a thickness of 0.01 to 10 µm, whose polarization current is 10 µA/cm² or less when measured by an electrochemical polarization evaluation method, at least on a surface in contact with said porous, conductive buffer layer.

2. The cell unit according to claim 1, wherein said buffer layer is constituted by a woven fabric or a non-woven fabric of conductive fibers made of a metal, carbon or a conductive resin, or a foamed sheet with penetrating pores having gas permeability.

3. The cell unit according to claim 1 or 2, wherein at least a surface of said buffer layer in contact with said metal separator is coated with a metal or a conductive resin to such an extent that it does not deprive the buffer layer of porosity.

4. The cell unit according to claim 3, wherein the metal covering the surface of said buffer layer is at least one selected from the group consisting of Au, Pt, Pd, Ru, Rh, Ir, Ag, Ti, Cu, Pb, Ni, Cr, Co, Fe and alloys thereof.

5. The cell unit according to claim 1 or 2, wherein said buffer layer is constituted by a woven fabric or a non-woven fabric of conductive fibers, and wherein said conductive fibers are coated with a metal or a conductive resin.

6. The cell unit according to claim 5, wherein the metal covering said conductive fibers is at least one selected from the group consisting of Au, Pt, Pd, Ru, Rh, Ir, Ag, Ti, Cu, Pb, Ni, Cr, Co, Fe and alloys thereof.

7. The cell unit according to any one of claims 1 to 6, wherein said buffer layer has a porosity of 20 to 90%.

8. The cell unit according to any one of claims 1 to 7, wherein said buffer layer has a thickness of 0.05 to 1.0 mm.

9. The cell unit according to any one of claims 1 to 7, wherein said buffer layer is a buffer coating having a thickness of 5 to 50 µm, which is formed on a surface of said graphite collector in contact with said metal separator.

10. The cell unit according to any one of claims 1 to 9, wherein the conductive, corrosion-resistant coating formed on at least a surface of said metal separator in contact with said porous, conductive buffer layer is at least one selected from the group consisting of Au, Pt, Ag, Pd, Rh, Ru, Ir, Ni, Cr and alloys thereof.

11. The cell unit according to claim 10, wherein said conductive, corrosion-resistant coating is formed on the surface of said metal separator by etching a metal separator substrate, repeating a zincate conversion treatment comprising a washing treatment with acid and an immersion treatment in a zincate bath 4 times or more, and then plating said metal thereto.

12. The cell unit according to claim 11, wherein said metal separator substrate before said etching treatment has a surface roughness of 0.02 to 0.3 µm at least on a surface, on which said conductive, corrosion-resistant coating is formed.

13. The cell unit according to any one of claims 1 to 12, wherein said metal separator substrate is made of aluminum or its alloy.

14. The cell unit according to claim 13, wherein said metal separator substrate is made of high-purity aluminum having a purity of 99.9% or more.

15. The cell unit according to any one of claims 1 to 14, wherein said graphite collector acts as said buffer layer.
